# NEUE EUROPÄISCHE PATENTSCHRIFT

(11) **EP 0 209 613 B2**
(45) Veröffentlichungstag und Bekanntmachung des Hinweises auf die Entscheidung über den Einspruch: **06.09.2000**
(45) Hinweis auf die Patenterteilung: 04.10.1989
(21) Anmeldenummer: 85109115.7
(22) Anmeldetag: 20.07.1985
(51) Int. Cl.: C04B 18/06

(54) **Verfahren zur umweltfreundlichen Deponierung von Kohlekraftwerk-Reststoffen**
Process for the environmentally acceptable disposal of wastes from coal-fired power plants
Procédé pour la décharge acceptable du point de vue de l'environnement de déchets de centrales thermiques

(43) Veröffentlichungstag der Anmeldung: 28.01.1987
(73) Patentinhaber: GFR Gesellschaft für die Aufbereitung und Verwertung von Reststoffen mbH, D-30853 Langenhagen (DE)
(72) Erfinder: Lukas, Walter, Prof. Dr. Ing., A-6071 Aldrans/Innsbruck (AT); Hamm, Heiner, Dr. Dipl.-Ing., D-8700 Würzburg (DE); Hüller, Rolf, Dr. Dipl.-Chem., D-8712 Volkach (DE); Weissflog, Eckhard, Dr.Dipl.-Chem., D-8700 Würzburg (DE); Wirsching, Franz, Dr. Dipl.-Chem., D-8712 Iphofen (DE)
(74) Vertreter: Werner, Hans-Karsten, Dr.Dipl.-Chem.

(56) Entgegenhaltungen:
- EP-A- 0 139 953
- WO-A-82/00819
- DE-A- 2 608 927
- DE-A- 2 925 882
- DE-A- 3 109 879
- GB-A- 940 692
- GB-A- 1 439 938
- CHEMICAL ABSTRACTS, vol. 100, no. 8, February 1984, page 275, no. 56027q, Columbus, Ohio, US; G.I. Berdov et al.: "Mechanical-chemical activation of brown-coal ash", & IZV. SIB. OTD. AKAD. NAUK SSSR, SER. KHIM. NAUK 1983, (6), 45-7
- Sonderdruck aus Sammelband Kraftwerk und Umwelt 1985, Seiten 182 bis 195, U.Willems, K.Winter: Untersuchungen zum Deponieverhalten von Rückständen aus Verbrennung und Entschwefelung bei rheinischer Braunkohle

## Beschreibung

Gegenstand der vorliegenden Erfindung ist ein Verfahren zur umweltfreundlichen Deponierung von Kohlekraftwerk-Reststoffen durch Vermischung von trockenen Reststoffen mit Reststoffen einer Entschwefelungsanlage.

In allen Kohlekraftwerken fallen trockene Reststoffe in Form von Rostaschen und Flugaschen an, die zwar teilweise für andere Zwecke verwendet werden können, jedoch noch immer zum größten Teil in Deponien verbracht werden müssen. Wegen der Staubbelästigung und der Verunreinigung des Grundwassers bei der Auslaugung deponierter Flugaschen durch Grundwasser sind bei der Deponierung besondere Maßnahmen erforderlich. Um die Flugasche von Braunkohle-Verbrennungsanlagen besser deponieren zu können, wird seit einiger Zeit die Flugasche stellenweise vor der Verkippung mit Wasser versetzt und intensiv vermischt. Hierdurch wird eine Verdichtung bewirkt und eine Verringerung der Wasserdurchlässigkeit im Durchschnitt um den Faktor 1000; vgl. Braunkohle, Heft 2, Februar 1981, S. 7-11. Verwertungen von Flugaschen von Steinkohlekraftwerken sind beispielsweise beschrieben worden in der DE-OSen 24 00 350, 31 09 879, 31 13 714, 31 24 003, 31 17 436, 31 19 422, 23 57 407, 31 09 632 und EP-OS 22 318.

In der DE-OS 21 30 309 sowie den US-PSen 3,634,115, 3,720,609 und RE 29 783 ist ein Verfahren beschrieben, bei welchem Flugasche zusammen mit wäßrigen Aufschlämmungen chemischer Abfälle, Kalk und wasserlöslichen Sulfatverbindungen miteinander umgesetzt und zu deponierfähigen Produkten verarbeitet werden. Hierbei sollen insbesondere Beizlösungen mit einem hohen Gehalt löslicher Sulfate durch Umsetzung mit Calciumhydroxid oder Calciumcarbonaten neutralisiert und unter Zusatz von Flugasche deponiefähig gemacht werden.

Zur Rauchgasentschwefelung von Kohlekraftwerken werden in zunehmendem Maße Naßentschwefelungs-Verfahren eingesetzt. Ein Übersichtsartikel über die Entschwefelung von Rauchgas ist in Chem. Ing. Tech. 55 (1983) Nr. 9, S. 667 bis 683 erschienen, in welchem sowohl die nassen als auch die trockenen Entschwefelungsverfahren beschrieben sind.

Aus der EP-OS 01 39 953 ist ein Verfahren zur umweltfreundlichen Deponierung von Kohlekraftwerk-Reststoffen bekannt, bei dem trockene Reststoffe mit Reststoffen einer Entschwefelungsanlage unter Zusatz von mindesten 3 Gew.-% Calciumhydroxid zu einem erdfeuchten Produkt vermischt, in die Deponie verbracht und dort verdichtet werden.

Die vorliegende Erfindung hat sich die Aufgabe gestellt, dieses Verfahren zur umweltfreundlichen Deponierung von Kohlekraftwerk-Reststoffen zu verbessern durch Vermischen von trockenen Reststoffen mit Reststoffen einer Entschwefelungsanlage, bei dem der Zusatz von Calciumhydroxid entfallen kann. Insbesondere hat sich die Erfindung die Aufgabe gestellt, die Aschen und Flugaschen herkömmlicher Kohleverbrennungsanlagen mit den Reststoffen nasser oder trockener Entschwefelungsverfahren zu vermischen und deponiefähig zu machen und dabei den Zusatz von Calciumhydroxid ganz zu vermeiden.

Aus den intensiven Untersuchungen der Anmelderin hat sich ergeben, daß diese Aufgabe durch die Merkmale des Anspruchs 1 gelöst werden kann.

Die erfindungsgemäß verwendete feinstvermahlene Flugasche hat einen spezifischen Blainewert von mindestens 5000 cm²/g und der zugesetzte feinstvermahlene Klinker oder Zement weist einen spezifischen Blainewert von mindestens 3500 cm²/g auf. Als Zement kann sowohl Portlandzement als auch Eisen-Portlandzement verwendet werden. Es können auch Gemische von feinstvermahlener Flugasche mit feinstvermahlenem Klinker und/oder Zement eingesetzt werden. Insbesondere wenn der Anteil an feinstvermahlener Flugasche 2 % oder mehr beträgt, kann auf den Zusatz von feinstvermahlenem Klinker oder Zement ganz verzichtet werden. In dem deponierten Produkt beträgt das Verhältnis zu Gips 2 : 1 bis 20 : 1. Sind mehr als ein Drittel des Gemisches Gips, kann es zur Auslaugung durch Grundwasser oder Oberflächenwasser kommen. Da meist die festen Reststoffe mit den Reststoffen der Entschwefelungsanlage zusammen deponiert werden sollen, fallen je nach Schwefelgehalt der verbrannten Kohlen Mengenverhältnisse von 3 : 1 bis 12 : 1 an. Es genügt somit, einen ausreichenden Anteil der Flugasche feinst zu vermahlen und notfalls noch bis zu 1 Gew.-% feinstvermahlenen Klinker oder Zement zuzusetzen, um erfindungsgemäß gut deponierbare Gemische zu erhalten.

Feinstvermahlener Klinker unterscheidet sich von fertigem Zement bekanntlich durch einen gewissen Anteil feinstvermahlenes Calciumsulfat-Dihydrat.

Auf diesen Zusatz kann daher für das erfindungsgemäße Verfahren verzichtet werden, da das zu deponierende Gemisch ausreichende Mengen Calciumsulfat-Dihydrat, d.h.Gips, enthält.

Die Abbindung der erfindungsgemäßen Gemische erfolgt relativ langsam, nämlich erst im Verlauf von Wochen. Um optimale Ergebnisse zu erreichen, sollte das Gemisch bei der Deponierung und Verdichtung sowie mindestens während der ersten Wochen danach Temperaturen von 30 bis 50 °C aufweisen. Das langsame Abbinden führt dazu, daß auch innerhalb von Tagen nachträglich aufgegebene Schichten sich fest mit den vorhergehenden Schichten verbinden und dabei ein raumstabiles, nicht schwindendes Material liefern. Das langsame Abbinden gewährleistet weiterhin, daß es zu keinem schädlichen Wärmestau während des Abbindens kommt, der oft die Ursache für Inhomogenitäten und Schwachstellen des gebundenen Materials ist.

Die Gemische sollen erdfeucht bis breiig sein und möglichst ein Wasser-Feststoff-Verhältnis (WFV) aufweisen, das mindestens in der Nähe der maximalen Verdichtbarkeit nach Proctor und höchstens bei 0,50 liegt. Erdfeuchte, maximal verdichtbare Gemische sind solche, die maximale Proctordichte aufweisen. Die Proctordichte wird beispielsweise nach der DIN 18127 oder nach ASTM-D 698-70 bestimmt. Bei den erfindungsgemäßen deponierfähigen Gemischen wird die maximale Proctordichte bei Wasser-Feststoff-Verhältnissen (WFV) von 0,18 bis 0,25, vorzugsweise 0,19 bis 0,22 erreicht. Etwa der doppelte Proctorwert ergibt breiige Konsistenz und liegt bei einem WFV von 0,40 bis 0,50.

Die erfindungsgemäß erhaltenen deponierten Reststoffe geben keine Staubbelästigung und führen zu keiner Verunreinigung des Grundwassers durch Auslaugung, auch wenn sie gewisse Mengen an wasserlöslichen Salzen wie Sulfaten, Sulfiten, Chloriden und Nitraten enthalten.

Die so erhaltenen Produkte sind von hohem Raumgewicht, geringer Wasserdurchlässigkeit und mechanisch sehr stabil. Sie sind auch in der Lage, Schwermetall-Ionen so einzubinden, daß sie nicht ausgelaugt werden. Sie erfüllen somit alle Anforderungen an ein einfach und sicher deponierbares Produkt.

Um zu einem erdfeuchten Material zu kommen, reichen somit im allgemeinen schon Wassermengen von 18 bis 25 Gew.-% aus. Ein derartiges Material ist gut, einfach und staubfrei transportierbar und kann ohne besondere Vorsichtsmaßnahmen in die Deponie verbracht und dort in entsprechenden Lagen aufgetragen und verdichtet werden. Als Wasser können wie beim Verfahren gemäß EP-OS 01 39 953 auch wässrige Suspensionen und Kraftwerkabwässer verwendet werden. Bei höheren Wassermengen sinken zwar das Raumgewicht und die Druckfestigkeit etwas, nicht jedoch das Auslaugverhalten und die Permeabilität.

Das erfindungsgemäße Verfahren ist in den nachfolgenden Beispielen näher erläutert.

### Beispiel 1

Braunkohlenasche mit geringer puzzolanischer Aktivität wurde feinstvermahlen zu einem Blainewert von 5000 bis 12000 cm²/g, wodurch die puzzolanische Aktivität stark anstieg. 80 Gewichtsteile der gleichen Flugasche - unvermahlen - wurden mit 20 Gewichtsteilen Gips aus einer Rauchgasentschwefelungsanlage mit 2 Gewichtsteilen der feinstvermahlenen Flugasche vermischt, und zwar mit einem Wasser-Feststoff-Faktor (WFV) von 0,25. Das Raumgewicht betrug 1,54 t/m³.

Das Material wurde bei 20 °C 56 Tage gelagert und wies danach eine Wasserdurchlässigkeit von 2,4 × 10⁻⁹ auf. Die gleiche Mischung wurde 56 Tage bei 40 °C gelagert. Das dabei entstandene Produkt wies eine Wasserdurchlässigkeit von 8,3 × 10⁻¹⁰ auf.

### Beispiel 2

### Verg1eichsversuch

Das Ausgangsgemisch aus gleicher Flugasche und Gips, jedoch ohne Additiv, im Verhältnis 4 : 1 bei einem WFV von 0,25 und einem Raumgewicht von 1,54 t/m³ wurde 56 Tage bei 20 °C und bei 40 °C gelagert. Die Wasserdurchlässigkeit betrug in beiden Fällen 8,1 × 10⁻⁸. Da für Deponien die Wasserdurchlässigkeit höchstens 5 × 10⁻⁸ betragen darf, war das Ausgangsgemisch ohne Zusatz von feinstvermahlener Flugasche, feinstvermahlenem Klinker oder Zement nicht deponiefähig. Die Flugasche allein, mit Wasser (WFV 0,25) angerührt, hat nach 56 Tagen auch abgebunden und wies eine Wasserdurchlässigkeit von 1 × 10⁻⁸ auf. Diese Flugasche war somit gerade deponiefähig. Durch den Zusatz von 20 % Gips erhöhte sich jedoch die Wasserdurchlässigkeit so stark, daß das Gemisch ohne Zusätze nicht mehr deponiefähig war.

### Beispiel 2

Das Beispiel 1 wurde wiederholt, jedoch mit einem Wasser-Feststoff-Verhältnis (WFV) von 0,30. Die Werte für die Wasserdurchlässigkeit blieben praktisch unverändert gut, jedoch sanken das Raumgewicht auf 1,45 t/m³ und die Festigkeitswerte geringfügig. Sofern die pH-Werte der Ausgangsmischungen mindestens 10 betrugen, ergaben sich auch exzellente Werte für das Auslaugverhalten von Schwermetallen sowie für die Auslaugbarkeit von wasserlöslichen Anionen wie Chlorid und Sulfat.

## Patentansprüche

1. Verfahren zur umweltfreundlichen Deponierung von Kohlekraftwerk-Reststoffen durch Vermischen von trockener Flugasche mit Rauchgasgips im Verhältnis Flugasche zu Gips 2 : 1 bis 20 : 1 zu einem erdfeuchten bis breiigen Produkt, Verbringung in die Deponie und gegebenenfalls nachträgliche Verdichtung, dadurch gekennzeichnet daß das Gemisch mindestens 1,5 Gew.% feinstvermahlene Flugasche mit einem spezifischen Blainewert von mindestens 5000 cm²/g oder Gemische der feinstvermahlenen Flugasche mit bis zu 1. Gew.-% feinstvermahlenem Klinker oder Zement oder Gemische in derselben enthält mit einem spezifischen Blainewert von mindestens 3500 cm²/g, wobei das Wasser-Feststoff-Verhältnis (WFV) 0,18 bis 0,50 beträgt.

2. Verfahren gemäß Anspruch 1, dadurch gekennzeichnet, daß das Gemisch bei der Deponierung und Verdichtung sowie mindestens während den ersten Wochen danach Temperaturen von 30 bis 50°C aufweist.

## Claims

1. A process for the environmentally acceptable disposal of waste from coal-fired power plants by mixing dry fly ashes with flue gas gypsum in a ratio of fly ashes to gypsum of from 2:1 to 20:1 to form a soil-moist to pulpy product, carrying same to the disposal and, optionally, subsequent compaction thereof, characterized in that the mixture contains at least 1.5% by weight of extremely finely ground fly ashes having a specific Blaine value of at least 5,000 cm²/g or mixtures of the extremely finely ground fly ashes with up to 1% by weight of extremely finely ground clinker or cement or mixtures thereof having a specific Blaine value of at least 3,500 cm²/g, the water-to-solids ratio (WFV) being from 0.18 to 0.50.

2. The process according to claim 1, characterized in that the mixture while being disposed and compacted and at least during the first weeks thereafter has temperatures of from 30 °C to 50 °C.

## Revendications

1. Procédé pour décharger de façon non polluante des résidus de centrales fonctionnant au charbon, par mélange de cendres volantes sèches avec du gypse de gaz de fumées, avec un rapport cendres volantes/gypse de 2/1 à 20/1, pour obtenir un produit ayant une consistance allant de celle de la terre humide à celle d'une pâte, transport à la décharge et éventuellement compactage ultérieur, caractérisé en ce que le mélange contient au moins 1,5 % en poids de cendres volantes très finement moulues avec une surface spécifique Blaine d'au moins 5000 cm²/g, ou d'un mélange des cendres volantes très finement moulues avec jusqu'à 1 % de clinker très finement moulu ou de ciment ou d'un mélange de ceux-ci ayant une surface spécifique Blaine d'au moins 3500 cm²/g, le rapport eau sur solide (WFV) étant de 0,18 à 0,50.

2. Procédé selon la revendication 1, caractérisé en ce que le mélange est à des températures de 30 à 50°C lors de la décharge et du compactage, ainsi qu'au moins pendant les premières semaines qui suivent.
